# EUROPÄISCHE PATENTSCHRIFT

(11) **EP 0 573 813 B1**
(45) Veröffentlichungstag und Bekanntmachung des Hinweises auf die Patenterteilung: **12.08.1998**
(21) Anmeldenummer: 93107957.8
(22) Anmeldetag: 15.05.1993
(51) Int. Cl.: H04N 7/24, H04N 7/30

(54) **Verfahren, Coder und Decoder zur Datenübertragung und/oder -speicherung**
Method, coder and decoder for data transmission and/or storage
Procédé, codeur et décodeur pour la transmission et/ou la mémorisation de données

(30) Priorität: 09.06.1992 DE 4218695
(43) Veröffentlichungstag der Anmeldung: 15.12.1993
(73) Patentinhaber: Deutsche Thomson-Brandt GmbH, 78003 Villingen-Schwenningen (DE)
(72) Erfinder: Haupt, Dieter, W-3257 Springe 6 (DE); Holtz, Friedhelm, W-3000 Hannover 91 (DE); Keesen, Heinz Werner, W-3000 Hannover 1 (DE)
(74) Vertreter: Hartnack, Wolfgang, Dipl.-Ing.

(56) Entgegenhaltungen:
- EP-A- 0 385 654
- WO-A-91/02430
- WO-A-92/08289
- US-A- 4 907 101
- US-A- 5 047 852

## Beschreibung

Die Erfindung betrifft ein Verfahren, einen Coder und einen Decoder zur Datenübertragung und/oder -speicherung.

### Stand der Technik

In EP-A-0 276 753 wird ein Verfahren zur Datenübertragung beschrieben, bei dem Daten von Bildpunkt-Blöcken in transformierte Koeffizienten umgesetzt werden, die anschließend mit variabler Wortlänge codiert werden. Dabei werden die Koeffizienten in Blöcken mit einer festgelegten mittleren Länge codiert aufgezeichnet. Nicht ausgefüllte Blöcke werden mit zwischengespeicherten Daten von anderen Blöcken aufgefüllt. Um die Störempfindlichkeit zu verbessern, werden Gleichanteile und wichtige Wechselanteile der transformierten Koeffizienten in festen Abständen aufgezeichnet. Wenn Fehler auf dem Übertragungskanal bzw. Speichermedium aufgetreten sind, können jedoch die auf andere Blöcke verteilten Daten eines Blocks nicht decodiert werden.
Darum kann gemäß WO-A-9 208 289 jeder der Blöcke zusätzlich eine Adresspointer-Information enthalten, die nach Übertragungs- und/oder Lesefehlern bei der nachfolgenden Decodierung auf Adressen in einem Speicher hinweisen, aus denen die abgetrennten Daten-Anteile von Blöcken mit einer größeren als der mittleren Wortlänge wiedergewonnen und zur Decodierung genutzt werden können.
Durch die zusätzliche Adresspointer-Information steht allerdings bei gleichbleibender Kanalkapazität eine geringere Datenrate für die Bilddaten zur Verfügung, was bei ungestörter Decodierung zu einer verringerten Bildqualität führt.

### Erfindung

Der Erfindung liegt die Aufgabe zugrunde, ein verbessertes Verfahren zur Datenübertragung und/oder -speicherung anzugeben, welches eine gute Bildqualität im Normalbetrieb und eine Decodierung auch im Fehlerfall ermöglicht. Diese Aufgabe wird durch das in Anspruch 1 angegebene Verfahren gelöst.

Durch bekannte Verfahren der Bilddaten-Reduktion wird erreicht, daß Blöcke von Daten - insbesondere Bildpunktdaten - im Mittel eine Länge von m Bit erhalten. Diese durchschnittliche Anzahl von m Bits wird mittlere Blocklänge m genannt. Die Blöcke werden bei der Übertragung bzw. Aufzeichnung so angeordnet, daß die Blockanfänge im festen Abstand (Raster) mit der mittleren Blocklänge m liegen.
Jeder Block (Nutzdatenblock) enthält ein Adressinformations-Flag FL, einen Adresspointer mit den LSB's einer physikalischen Adresse und die Daten (Nutz-Bits) mit dem wichtigsten Anteil an der Datenblock-Quellinformation für diesen Block, z.B. jeweils aus einer DCT-Transformation (discrete cosine transform) einen Gleichanteil und wichtige, z.B. die größeren, Wechselanteile. Die eigentlich erforderliche Nutzdaten-Länge des Blocks wird im Folgenden als tatsächliche Blocklänge BL bezeichnet. BL kann größer, gleich oder kleiner als die mittlere Blocklänge m sein. Wenn z.B. BL > m, so ist FL = 0 und wenn BL ≤ m, so ist FL = 1. Im ersten Fall werden mit Hilfe der Pointeradresse die über die mittlere Blocklänge hinausgehenden Daten zwischengespeichert, um sie bei Blöcken mit BL < m an die Nutzbits angehängt zu übertragen. Im zweiten Fall werden zunächst die Nutzbits des aktuellen Nutzdatenblocks übertragen und anschließend mit Hilfe der Pointeradresse die über die mittlere Blocklänge hinausgehenden Nutzbits anderer Blöcke aus einem Zwischenspeicher ausgelesen. Für das erfindungsgemäße Verfahren ist es gleichwertig, ob der Fall BL = m dem Adressinformations-Flag FL '0' oder '1' zugeordnet wird.
Zusätzlich sind jeweils zwischen einer festgelegten Anzahl, z.B. 6 bis 8, von Nutzdatenblöcken oder Bildzeilen - im folgenden Blockgruppe genannt - Recovery-Pointerpaare REC eingefügt. Diese Recovery-Pointer sind vollständige Adress-Worte. Der eine Pointer POI0 dieses Pointerpaars gibt eine aktuelle Schreibadresse für den Zwischenspeicher an, von der an die über die mittlere Blocklänge hinausgehenden Daten- bzw. Wechselanteile von Blöcken mit BL > m zwischengespeichert werden. Der andere Pointer POI1 dieses Pointerpaars gibt eine aktuelle Leseadresse für den Zwischenspeicher an, ab der die jeweils noch nicht übertragenen ältesten, über die mittlere Blocklänge hinausgehenden Daten- bzw. Wechselanteile von Blöcken mit BL > m zwischengespeichert wurden.
Vorteilhaft können durch die Verwendung des Recovery-Pointer-paars und der auf die LSB's verkürzten Adresspointer auch Zusatzdaten in den vorhandenen Datenstrom ohne Funktions-Störung der beschriebenen Codierung/Decodierung eingefügt werden. Dies kann z.B. am Ende der Blöcke geschehen.

Im Prinzip dient das erfindungsgemäße Verfahren zur Datenübertragung und/oder -speicherung, bei der coderseitig Daten zunächst abschnittsweise in Digitalsignale mit unterschiedlicher Wortlänge umgesetzt und danach unter Verwendung von ersten Speichermitteln Blöcken konstanter, mittlerer Wortlänge zugewiesen werden, wobei ausgewählte Daten-Anteile - insbesondere aus jeweils einer Bildpunktblock-Transformation ein Gleichanteil und die wichtigsten Wechselanteile - aus den Abschnitten der Digitalsignale in jedem dieser Blöcke angeordnet sind und anschließend Blöcke mit einer geringeren als der mittleren Wortlänge, die vorher unter Verwendung von Adresspointer-Information mit Schreib- und Leseadressen in den Speichermitteln zwischengespeichert wurden, mit abgeteilten Daten-Anteilen von Blöcken mit einer größeren als der mittleren Wortlänge aufgefüllt werden, wobei Adress-Information mit übertragen und/oder gespeichert wird, und decoderseitig die Blöcke unter Verwendung von zweiten Speichermitteln und der Adress-Information in ihrer ursprünglichen, unterschiedlichen Wortlänge entsprechend wiedergewonnen werden, indem die abgeteilten Daten-Anteile von Blöcken mit einer größeren als der mittleren Wortlänge jeweils zu den zeitlich zugehörigen ausgewählten Daten-Anteilen hinzugefügt werden, wobei coderseitig:
- vor dem Beginn jeder Gruppe von einer festgelegten Anzahl von Blöcken eine entsprechende Schreib- und Lese-Adresse mit voller Wortbreite übertragen und/oder aufgezeichnet wird;
- die zu einem Block zugehörige Adresspointer-Information nur eine solche Anzahl von LSB's der vollen Wortbreite der Schreib- oder Leseadresse für den Block enthält, die der Differenz zwischen einer festgelegten maximalen Wortlänge und der mittleren Wortlänge entspricht,
und daß decoderseitig:
- die Schreib- und die Leseadressen mit der vollen Wortbreite für die Blockgruppen und die Schreib- oder Leseadressen für jeden Block aus dem übertragenen und/oder aufgezeichneten Datenstrom ermittelt werden;
- die Blöcke unter Verwendung von zweiten Speichermitteln und diesen Adressen in ihrer ursprünglichen, unterschiedlichen Wortlänge entsprechend wiedergewonnen werden, indem die abgeteilten Daten-Anteile von Blöcken mit einer größeren als der mittleren Wortlänge jeweils zu den zeitlich zugehörigen ausgewählten Daten-Anteilen hinzugefügt werden, wobei nach einer Unterbrechung oder Störung des übertragenen und/oder aufgezeichneten Datenstroms mit Hilfe der Schreib- und der Leseadressen mit der vollen Wortbreite eine fehlerfreie Wiederaufnahme der Decodierung ermöglicht ist.

Vorteilhafte Weiterbildungen des erfindungsgemäßen Verfahrens ergeben sich aus den zugehörigen abhängigen Ansprüchen.

Der Erfindung liegt die weitere Aufgabe zugrunde, einen Coder für das erfindungsgemäße Verfahren anzugeben. Diese Aufgabe wird durch die in Anspruch 6 angegebene Vorrichtung gelöst.

Im Prinzip ist der erfindungsgemäße Coder versehen mit einer Codierschaltung, die Daten abschnittsweise in Digitalsignale mit unterschiedlicher Wortlänge umgesetzt, mit einem nachgeschalteten Multiplexer, der unter Verwendung von nachgeschalteten ersten Speichermitteln Blöcke konstanter, mittlerer Wortlänge bildet, wobei ausgewählte Daten-Anteile, insbesondere ein Gleichanteil und die wichtigsten Wechselanteile mit ihren zugehörigen Adressen, aus den Abschnitten der Digitalsignale für jeden dieser Blöcke in den ersten Speichermitteln gespeichert werden und Blöcke mit einer geringeren als der mittleren Wortlänge mit abgeteilten Daten-Anteilen von Blöcken mit einer größeren als der mittleren Wortlänge aufgefüllt werden, mit einem den Speichermitteln nachgeschalteten Demultiplexer, der die zu einem jeweiligen Block zugehörenden Daten bündelt und zu einem Kanal weiterleitet, mit einer von den ersten Speichermitteln gespeisten Schaltung zur Adresspointer-Berechnung, die den Multiplexer und den Demultiplexer steuert und den ersten Speichermitteln für jeden Block ein Adressinformations-Flag und eine Adresspointer-Information mit Schreib- und Leseadressen zuführt, wobei die Schaltung zur Adresspointer-Berechnung so ausgelegt ist, daß vor dem Beginn jeder Gruppe von einer festgelegten Anzahl von Blöcken eine entsprechende Schreib- und Lese-Adresse mit voller Wortbreite übertragen und/oder aufgezeichnet wird und daß die zu einem Block zugehörige Adresspointer-Information nur eine solche Anzahl von LSB's der vollen Wortbreite der Schreib- oder Leseadresse für den Block enthält, die der Differenz zwischen einer festgelegten maximalen Wortlänge und der mittleren Wortlänge entspricht.

Der Erfindung liegt die weitere Aufgabe zugrunde, einen Decoder für das erfindungsgemäße Verfahren anzugeben. Diese Aufgabe wird durch die in Anspruch 7 angegebene Vorrichtung gelöst.

Im Prinzip ist der erfindungsgemäße Decoder versehen mit einer einem Kanal nachgeschalteten Adresspointer-Decodierschaltung zur Decodierung von Adresspointer-Information und, für jeden Block, zur Abtrennung und Weiterleitung eines Adressinformations-Flags und einer Schreib- oder Leseadresse an eine Adress-Berechnungs-Schaltung, mit einem der Adresspointer-Decodierschaltung nachgeschalteten Multiplexer, der zusammen mit nachgeschalteten zweiten Speichermitteln Daten-Blöcke in ihrer ursprünglichen, unterschiedlichen Wortlänge wiedergewinnt, mit einem nachgeschalteten Demultiplexer, der die zu einem jeweiligen Block zugehörenden Daten bündelt und zu einem Variable-Length-Decoder weiterleitet, an dessen Ausgang den Quell-Daten bei der Codierung entsprechende Daten zur Verfügung stehen, wobei die Adress-Berechnungs-Schaltung den Multiplexer und den Demultiplexer steuert und den zweiten Speichermitteln entsprechende Adressen zuführt, und wobei die Adresspointer-Decodierschaltung so ausgestaltet ist, daß sie an die Adress-Berechnungs-Schaltung für jeden Block eine Schreib- oder Leseadresse mit reduzierter Wortbreite und für jede Gruppe von Blöcken eine Schreib- oder Leseadresse mit voller Wortbreite weiterleitet, und wobei vor dem Beginn jeder Gruppe von einer festgelegten Anzahl von Blöcken eine entsprechende Schreib- und Lese-Adresse mit voller Wortbreite vorliegt, und die zu einem Block zugehörige Adresspointer-Information nur eine solche Anzahl von LSB's der vollen Wortbreite der Schreib- oder Leseadresse für den Block enthält, die der Differenz zwischen einer festgelegten maximalen Wortlänge und der mittleren Wortlänge entspricht,
und wobei die Adress-Berechnung-Schaltung so ausgestaltet ist, daß
- die Schreib- und die Leseadressen mit der vollen Wortbreite für die Blockgruppen und die Schreib- oder Leseadressen für jeden Block aus dem übertragenen und/oder aufgezeichneten Datenstrom ermittelt werden;
- die Blöcke unter Verwendung der zweiten Speichermitteln (9, 10) und diesen Adressen in ihrer ursprünglichen, unterschiedlichen Wortlänge entsprechend wiedergewonnen werden, indem die abgeteilten Daten-Anteile (ACₓ) von Blöcken mit einer größeren als der mittleren Wortlänge jeweils zu den zeitlich zugehörigen ausgewählten Daten-Anteilen hinzugefügt werden, wobei nach einer Unterbrechung oder Störung des übertragenen und/oder aufgezeichneten Datenstroms mit Hilfe der Schreib- und der Leseadressen mit der vollen Wortbreite eine fehlerfreie Wiederaufnahme der Decodierung ermöglicht ist.

### Zeichnungen

Anhand der Zeichnungen sind Ausführungsbeispiele der Erfindung beschrieben. Die Zeichnungen zeigen in:
- Fig. 1: erfindungsgemäße Anordnung von Recovery-Information und Nutzdaten-Blöcken;
- Fig. 2: Blockschaltbild für einen erfindungsgemäßen Coder und Decoder.

### Ausführungsbeispiele

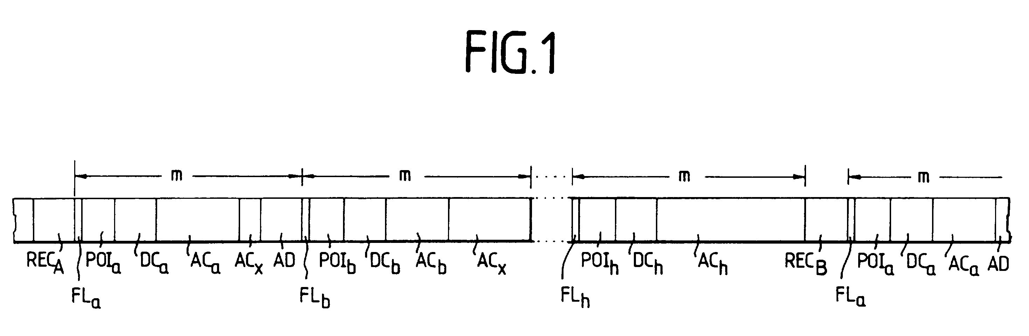

In Fig. 1 enthalten die Nutzdaten-Blöcke mit der mittleren Blocklänge m außer einem Gleichanteil DC und einem Wechselanteil AC zusätzlich eine Adresspointer-Information POI_{a...h} und ein Adressinformations-Flag FL_{a...h}. Die Daten des ersten Blocks tragen den Index 'a', die des zweiten den Index 'b' und die eines z.B. achten den Index 'h'. Der Index '0' bezeichnet einen Schreibpointer und der Index '1' einen Lesepointer. Die Restkapazitäten der Blöcke können mit zusätzlichen Daten bzw. Wechselanteilen ACₓ aus anderen Blöcken aufgefüllt werden. Zusätzlich kann ein Block weitere für die Decodierung benötigte Daten enthalten, z.B. ein Flag, welches anzeigt, ob bewegungsadaptiv mit einer 8*8-DCT oder mit einer doppelten 4*8-DCT codiert wurde und/oder Information über die Aktivität in einem Block und/oder Fehlerschutzinformation. Eine 8*8-DCT wird vorteilhaft bei statischem Bildinhalt verwendet und eine 2*(4*8)-DCT bei dynamischem Bildinhalt in Interlace-Bildsignalen.
Erfindungsgemäß werden zusätzlich in regelmäßigen Abständen Recovery-Pointerpaare REC_{A}, REC_{B}, ..., eingefügt, die die volle Schreib- und Leseadresse für Zwischenspeichermittel umfassen mit z.B. jeweils 20 Bit für einen Zwischenspeicher von 1 Mbit, wobei jedoch die Adresspointer POI_{a...h} für den aktuellen Block nur jeweils die letzten Bits einer Lese- oder Schreibadresse für den Zwischenspeicher enthalten: POI₀ bzw. POI₁ = REC+|BL-m|.
Die Wortlänge der Adresspointer entspricht dabei der maximal auftretenden bzw. zulässigen Anzahl der Bits eines Nutzdatenblocks oder der Nutzbits, minus der mittleren Blocklänge m. Hat ein großer Block z.B. 500 Bit, so ist die Wortlänge der Adresspointer auf minimal 9 Bit (2⁹ = 512) zu bemessen. Ist z.B. m = 20 Bit und BL = 50 bit und steht der Schreibpointer POI0 von den Recovery-Pointern REC_{A} auf der physikalischen Adresse 100 und der Lesepointer POI1 auf der physikalischen Adresse 0, so ist im nächstfolgenden Nutzdatenblock FLₐ = 0 und POI₀ₐ = 100+|50-20| = 130. Hat der danach folgende Block BL = 18, so ist in diesem Nutzdatenblock FL_{b} = 1 und POI_{1b} = 0+|18-20| = 2. Hat der folgende Block BL = 30, so ist FL_{c} = 0 und POI_{0c} = 130+|30-20| = 140. Werden, wie weiter unten beschrieben, keine Zusatzdaten AD eingefügt, so ergeben sich die Recovery-Pointer REC_{B} durch entsprechende Aufsummierung der Werte für POI_{a...h}.

Durch die erfindungsgemäße Aufteilung der Pointerinformationen werden z.B. alle 6-8 Blöcke zusätzlich 2*20 Bit benötigt, aber bei jedem Nutzdatenblock werden gegenüber WO 92/08289 20-9 Bit = 11 Bit eingespart. Die Gesamt-Datenrate für die Pointerinformation sinkt und die Qualität der (Bild-)Datencodierung kann entsprechend steigen. Nach einer Übertragungs- oder Wiedergabestörung kann mit Hilfe der Recovery-Pointer weiter fehlerfrei decodiert werden.

Besonders vorteilhaft ist, daß aufgrund der doppelten Pointer REC und POI zusätzliche Daten AD in den bisher beschriebenen Datenstrom eingefügt werden können, ohne die Funktion zu stören, auch nach einem Fehler.
Ein Nutzdatenblock kann FL/POI/DC bzw. FL/POI/DC/AC oder zusätzlich ACₓ, AD oder ACₓ/AD enthalten. In jedem Fall muß bei nicht konstantem Gesamt-Datenstrom mit üblichen Regelverfahren (z.B. Quantisierung) so gesteuert werden, daß bei der Zwischenspeicherung kein Speicherüber- oder Unterlauf entsteht. Diese Regelung kann aus den Werten von REC abgeleitet werden.
Bei z.B. einem digitalen Videorecorder ist es möglich, im schnellen Suchlauf in gewissen Abständen zusammenhängende Datenspuren zwischen einem Recovery-Pointer und dem nächsten (inclusive eines Fehlerschutzes) von einem Speichermedium zu lesen. Aufgrund der absoluten Adresse REC kann dann der entsprechende Ausschnitt eines Bildes an der richtigen Stelle auf einem Display dargestellt werden.

Bei bestimmten Codiermethoden für die Übertragung (z.B.terrestrische oder satellitengestützte Ausstrahlung von digitalen Fernsehsignalen) oder Aufzeichnung von Bildsignalen, z.B. MPEG (moving pictures expert group), gibt es intraframe und interframe-codierte Bilder. Dabei enthalten codierte Bildpunkt-Blöcke jeweils eine End-of-Block-Kennung. Vorteilhaft können nun mit der Erfindung interframe-codierte Bildpunktblöcke als Zusatzdaten AD und intraframe-codierte Bildpunktblöcke mit den Gleichanteilen DC und den Wechselanteilen AC bzw. ACₓ übertragen oder aufgezeichnet werden, wobei die End-of-Block-Kennung der intraframe-codierten Bildpunktblöcke entfällt, weil die Blocklänge BL decoderseitig aus den Pointerinformationen bestimmt werden kann. Dabei können die Interframe-Blöcke verschiedenen Zeitbereichen entstammen.

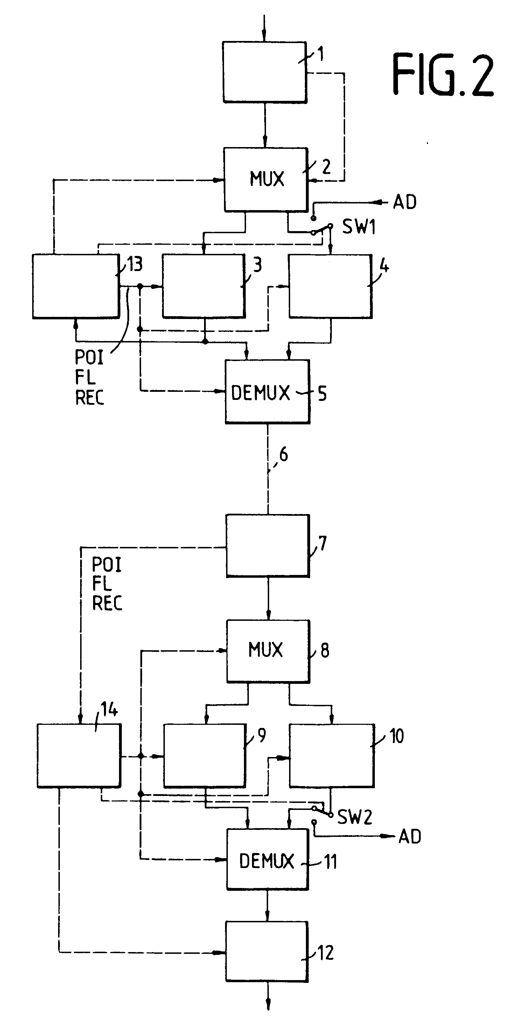

Fig. 2 zeigt ein Coder- und Decoder-Blockschaltbild mit dem die erfindungsgemäße Übertragung bzw. Speicherung realisiert werden kann. In einer Codierschaltung 1 werden z.B. DCT-transformierte Bilddaten quantisiert, mit variabler Länge (VLC) codiert und mit Adressen für Wechselanteile versehen. Je nach sich ergebender Blocklänge teilt ein nachgeschalteter Multiplexer 2 die Blockdaten auf die nachfolgenden Dualport-RAM's 3 und 4 auf. Recovery-Pointerpaare REC, Adressinformations-Flags FL und Adresspointer POI werden von einer Schaltung zur Pointer-Berechnung 13 in ein Dualport-RAM_{FIX} 3 als Dateninformation für jeden Block mit eingeschrieben. Aus diesen Daten bildet die Pointerberechnungsschaltung 13 ebenfalls die Adress-Information für das DualportRAM_{VAR} 4 für das Zwischenspeichern der zwischenzeitlich überzähligen Nutzbits.
POI₀ gibt wie oben beschrieben bei FL = 0 an, bis zu welcher Adresse das Dualport-RAM_{VAR} 4 mit Daten beschrieben worden ist. POI₁ gibt bei FL = 1 an, bis zu welcher Adresse Daten, die zu anderen Blöcken gehören, aus dem Dualport-RAM_{VAR} 4 ausgelesen werden. In einem sich an die Dualport-RAM's anschließenden Demultiplexer 5 werden die Nutzbits wieder zusammengeführt und zusammen mit den Daten REC, FL und POI auf den Kanal bzw. das Speichermedium 6 gegeben.

Mit den Informationen, die eine Pointer-Decodierschaltung 7 decodiert hat, kann eine Schaltung zur Adress-Berechnung 14 die notwendigen Adressinformationen für ein Dualport-RAM_{FIX} 9 und für ein Dualport-RAM_{VAR} 10 zur Verfügung stellen. POI₀ gibt bei FL = 0 wie oben beschrieben decoderseitig die Adresse an, bis zu welcher Nutzbits aus dem Dualport-RAM_{VAR} 10 in Richtung Variable-Length-Decoder 12 ausgelesen werden. Dieser Decoder hat eine zur Codierschaltung 1 entsprechend inverse Funktion. POI₁ zeigt bei FL = 1 an, bis zu welcher Adresse Daten in das Dualport-RAM-_{VAR} 10 geschrieben werden. Entsprechend dem Coderteil ist zwischen dem Adresspointer-Decoder 7 und den RAM's 9 und 10 ein entsprechender Multiplexer 8 und zwischen diesen RAM's und dem Variable-Length-Decoder 12 ein entsprechender Demultiplexer 11 angeordnet.
Statt Dualport-RAM's können auch andere Speichermittel wie z.B. Magnetplatten oder optische Speicher verwendet werden.

Zusätzlich kann sich coderseitig am Eingang des Dualport-RAM_{VAR} 4 ein von der Pointer-Berechnungsschaltung 13 gesteuerter Schalter SW1 befinden, über den die Zusatzdaten DA wie oben beschrieben eingelesen werden können. Decoderseitig wird der entsprechende, von der Adress-Berechnungsschaltung 14 gesteuerte Schalter SW2 am Ausgang des Dualport-RAM_{VAR} 10 zum Ausgeben der Zusatzdaten DA verwendet.

Durch die coderseitige Puffersteuerung ist normalerweise sichergestellt, daß der Lesepointer den Schreibpointer nicht 'überholt'. Das heißt, daß Informationen aus den Speichermitteln auszulesen versucht wird, die zu diesem Zeitpunkt noch nicht eingeschrieben sind. Die Pointer-Berechnungsschaltung 13 kann dies zusätzlich durch einen entsprechenden Vergleich der Pointer sicherstellen. Außerdem kann beispielsweise ein variables Codewort mit sehr großer Wortlänge in den Datenstrom eingefügt werden, welches decoderseitig nicht verwertet wird.

Wenn einem Block mit BL > m z.B. sehr viele Blöcke mit BL = m folgen, können decoderseitig die überzähligen Nutzbits aufgrund der noch ausstehenden Übertragung bzw. Speicherung so lange nicht verfügbar sein, daß beim Eintreffen eines Blocks mit BL < m diese Nutzbits aufgrund der begrenzten Speicherkapazität der RAM's nicht mehr zugeordnet werden können. Um einen solchen Zustand zu vermeiden, können regelmäßig durch entsprechende Steuerung zwangsweise Daten aus dem RAM 4 entnommen werden, z.B. ein Bit oder Byte pro Nutzdatenblock oder 10% von der mittleren Blocklänge m. Durch die Pufferregelung wird diese Entnahme dann entsprechend ausgeglichen.

Vorteilhaft können die coderseitigen und decoderseitigen Speichermittel gleichzeitig als Quantisierungs-Puffer benutzt werden. Dabei gibt die Adress-Differenz zwischen den Schreib- und Lesepointern den Füllstand dieses Quantisierungspuffers an.

## Patentansprüche

1. Verfahren zur Datenübertragung und/oder -speicherung, bei dem coderseitig Daten zunächst abschnittsweise in Digitalsignale mit unterschiedlicher Wortlänge (BL) umgesetzt und danach unter Verwendung von ersten Speichermitteln (3, 4) Blöcken konstanter, mittlerer Wortlänge (m) zugewiesen werden, wobei ausgewählte Daten-Anteile - insbesondere aus jeweils einer Bildpunktblock-Transformation ein Gleichanteil (DCₐ, DC_{b}, DCₕ) und die wichtigsten Wechselanteile (Acₐ, AC_{b}, ACₕ) - aus den Abschnitten der Digitalsignale in jedem dieser Blöcke angeordnet sind und anschließend Blöcke mit einer geringeren als der mittleren Wortlänge, die vorher unter Verwendung von Adresspointer-Information (FL, POI) mit Schreib- und Leseadressen in den Speichermitteln (4) zwischengespeichert wurden, mit abgeteilten Daten-Anteilen (ACₓ) von Blöcken mit einer größeren als der mittleren Wortlänge aufgefüllt werden, wobei Adress-Information mit übertragen und/oder gespeichert wird,
und decoderseitig die Blöcke unter Verwendung von zweiten Speichermitteln (9, 10) und der Adress-Information in ihrer ursprünglichen, unterschiedlichen Wortlänge entsprechend wiedergewonnen werden, indem die abgeteilten Daten-Anteile (ACₓ) von Blöcken mit einer größeren als der mittleren Wortlänge jeweils zu den zeitlich zugehörigen ausgewählten Daten-Anteilen hinzugefügt werden, dadurch **gekennzeichnet,** daß coderseitig:
- vor dem Beginn jeder Gruppe von einer festgelegten Anzahl von Blöcken eine entsprechende Schreib- (POI0) und Lese- (POI1) Adresse mit voller Wortbreite übertragen und/oder aufgezeichnet wird;
- die zu einem Block zugehörige Adresspointer-Information (POI₀, POI₁) nur eine solche Anzahl von LSB's der vollen Wortbreite der Schreib- oder Leseadresse für den Block enthält, die der Differenz zwischen einer festgelegten maximalen Wortlänge und der mittleren Wortlänge entspricht,
und daß decoderseitig:
- die Schreib- und die Leseadressen mit der vollen Wortbreite für die Blockgruppen und die Schreib- oder Leseadressen für jeden Block aus dem übertragenen und/oder aufgezeichneten Datenstrom ermittelt werden;
- die Blöcke unter Verwendung von zweiten Speichermitteln (9, 10) und diesen Adressen in ihrer ursprünglichen, unterschiedlichen Wortlänge entsprechend wiedergewonnen werden, indem die abgeteilten Daten-Anteile (ACₓ) von Blöcken mit einer größeren als der mittleren Wortlänge jeweils zu den zeitlich zugehörigen ausgewählten Daten-Anteilen hinzugefügt werden, wobei nach einer Unterbrechung oder Störung des übertragenen und/oder aufgezeichneten Datenstroms mit Hilfe der Schreib- und der Leseadressen mit der vollen Wortbreite eine fehlerfreie Wiederaufnahme der Decodierung ermöglicht ist.

2. Verfahren nach Anspruch 1, wobei coderseitig zusätzliche Daten (AD) in Form von abgeteilten Daten-Anteilen über die ersten Speichermittel (4) in den Datenstrom eingefügt werden und decoderseitig über die zweiten Speichermittel (10) aus dem Datenstrom entnommen werden, wobei Beginn und Ende der zusätzlichen Daten über eine entsprechende Differenz zwischen den Schreib- und Leseadressen mit der vollen Wortbreite und den Schreib- oder Leseadressen mit der reduzierten Wortbreite ermittelt wird.

3. Verfahren nach Anspruch 1 oder 2, wobei das Überschreiten der Schreibadresse durch die Leseadresse coderseitig durch einen Vergleich oder durch die Einfügung von bei der Decodierung unberücksichtigt bleibenden Codeworten mit großer Länge verhindert wird.

4. Verfahren nach einem oder mehreren der Ansprüche 1 bis 3, wobei zwangsweise eine festgelegte Anzahl von Bits pro mittlerer Wortlänge (m) aus den ersten Speichermitteln (4) entnommen und dem Datenstrom hinzugefügt wird.

5. Verfahren nach einem oder mehreren der Ansprüche 1 bis 4, wobei die ersten (3, 4) und/oder zweiten (9, 10) Speichermittel gleichzeitig als Quantisierungs-Puffer für die Datencodierung bzw. -decodierung verwendet werden, wobei die Differenz zwischen Schreib- und Leseadresse den Füllstand dieses Puffers angibt.

6. Coder für ein Verfahren nach einem oder mehreren der Ansprüche 1 bis 5, versehen mit einer Codierschaltung (1), die Daten abschnittsweise in Digitalsignale mit unterschiedlicher Wortlänge (lₙ) umgesetzt, mit einem nachgeschalteten Multiplexer (2), der unter Verwendung von nachgeschalteten ersten Speichermitteln (3, 4) Blöcke konstanter, mittlerer Wortlänge (m) bildet, wobei ausgewählte Daten-Anteile, insbesondere ein Gleichanteil (DC) und die wichtigsten Wechselanteile (ACₙ) mit ihren zugehörigen Adressen, aus den Abschnitten der Digitalsignale für jeden dieser Blöcke in den ersten Speichermitteln gespeichert werden und Blöcke mit einer geringeren als der mittleren Wortlänge mit abgeteilten Daten-Anteilen (ACₓ) von Blöcken mit einer größeren als der mittleren Wortlänge aufgefüllt werden, mit einem den Speichermitteln nachgeschalteten Demultiplexer (5), der die zu einem jeweiligen Block zugehörenden Daten bündelt und zu einem Kanal (6) weiterleitet, mit einer von den ersten Speichermitteln gespeisten Schaltung zur Adresspointer-Berechnung (13), die den Multiplexer und den Demultiplexer steuert und den ersten Speichermitteln für jeden Block ein Adressinformations-Flag (FL) und eine Adresspointer-Information (POI) mit Schreib- und Leseadressen zuführt, dadurch **gekennzeichnet**, daß die Schaltung zur Adresspointer-Berechnung so ausgelegt ist, daß vor dem Beginn jeder Gruppe von einer festgelegten Anzahl von Blöcken eine entsprechende Schreib- (POI0) und Lese- (POI1) Adresse mit voller Wortbreite übertragen und/oder aufgezeichnet wird und daß die zu einem Block zugehörige Adresspointer-Information (POI₀, POI₁) nur eine solche Anzahl von LSB's der vollen Wortbreite der Schreib- oder Leseadresse für den Block enthält, die der Differenz zwischen einer festgelegten maximalen Wortlänge und der mittleren Wortlänge entspricht.

7. Decoder für ein Verfahren nach einem oder mehreren der Ansprüche 1 bis 5, versehen mit einer einem Kanal (6) nachgeschalteten Adresspointer-Decodierschaltung (7) zur Decodierung von Adresspointer-Information und, für jeden Block, zur Abtrennung und Weiterleitung eines Adressinformations-Flags (FL) und einer Schreib- oder Leseadresse an eine Adress-Berechnungs-Schaltung (14), mit einem der Adresspointer-Decodierschaltung nachgeschalteten Multiplexer (8), der zusammen mit nachgeschalteten zweiten Speichermitteln (9, 10) Daten-Blöcke in ihrer ursprünglichen, unterschiedlichen Wortlänge (lₙ) wiedergewinnt, mit einem nachgeschalteten Demultiplexer (11), der die zu einem jeweiligen Block zugehörenden Daten bündelt und zu einem Variable-Length-Decoder (12) weiterleitet, an dessen Ausgang den Quell-Daten bei der Codierung entsprechende Daten zur Verfügung stehen, wobei die Adress-Berechnungs-Schaltung (14) den Multiplexer und den Demultiplexer steuert und den zweiten Speichermitteln entsprechende Adressen zuführt, dadurch **gekennzeichnet**, daß die Adresspointer-Decodierschaltung so ausgestaltet ist, daß sie an die Adress-Berechnungs-Schaltung für jeden Block eine Schreib- oder Leseadresse mit reduzierter Wortbreite und für jede Gruppe von Blöcken eine Schreib- oder Leseadresse mit voller Wortbreite weiterleitet, wobei vor dem Beginn jeder Gruppe von einer festgelegten Anzahl von Blöcken eine entsprechende Schreib- (POI0) und Lese-(POI1) Adresse mit voller Wortbreite vorliegt, und die zu einem Block zugehörige Adresspointer-Information (POI₀, POI₁) nur eine solche Anzahl von LSB's der vollen Wortbreite der Schreib- oder Leseadresse für den Block enthält, die der Differenz zwischen einer festgelegten maximalen Wortlänge und der mittleren Wortlänge entspricht, und daß die Adress-Berechnungs-Schaltung so ausgestaltet ist, daß
- die Schreib- und die Leseadressen mit der vollen Wortbreite für die Blockgruppen und die Schreib- oder Leseadressen für jeden Block aus dem übertragenen und/oder aufgezeichneten Datenstrom ermittelt werden;
- die Blöcke unter Verwendung der zweiten Speichermittel (9, 10) und dieser Adressen in ihrer ursprünglichen, unterschiedlichen Wortlänge entsprechend wiedergewonnen werden, indem die abgeteilten Daten-Anteile (ACₓ) von Blöcken mit einer größeren als der mittleren Wortlänge jeweils zu den zeitlich zugehörigen ausgewählten Daten-Anteilen hinzugefügt werden, wobei nach einer Unterbrechung oder Störung des übertragenen und/oder aufgezeichneten Datenstroms mit Hilfe der Schreib- und der Leseadressen mit der vollen Wortbreite eine fehlerfreie Wiederaufnahme der Decodierung ermöglicht ist.

## Claims

1. Method of transmitting and/or storing data in which the data at the coding end is initially converted, in segmental manner, into digital signals of differing word lengths (BL) and thereafter is assigned to blocks of constant average word length (m) using first storage means (3, 4), whereby selected components of the data - in particular, a dc component (DCₐ, DC_{b}, DCₕ) and the most important ac components (ACₐ, AC_{b}, ACₕ) resulting in each case from a picture element block transformation process - from the segments of the digital signals are arranged in each of these blocks and subsequently those blocks having a word length that is smaller than average, and which were previously buffer stored in the storage means (4) using address pointer information (FL, POI) including read and write addresses, are filled with data components (ACₓ) that have been separated out from blocks having a word length which is greater than average, and whereby the address information is transmitted and/or stored with the data,
and, at the decoding end, the blocks are regenerated in correspondence with their original differing word lengths by using the address information and second storage means (9, 10), in that the data components (ACₓ) that were separated out from blocks having a word length which is greater than average are added to the selected data components appertaining respectively thereto in time, characterised in that, at the coding end:
- a corresponding write (POI0) and read (POI1) address of the full word width is transmitted and/or recorded before the beginning of each group of a predetermined number of blocks;
- the address pointer information (POI₀, POI₁) appertaining to a block only contains a number of LSBs of the full word width of the read or write address for the block which is such as corresponds to the difference between a predetermined maximum word length and the average word length,
and in that, at the decoding end:
- the read and the write addresses having the full word width for the groups of blocks and the read or write addresses for each block are determined from the transmitted and/or recorded data stream;
- the blocks are regenerated in correspondence with their original differing word lengths by using these addresses and second storage means (9, 10), in that the data components (ACₓ) that were separated out from blocks having a word length which is greater than average are added to the selected data components appertaining respectively thereto in time, whereby error free resumption of the decoding process is made possible following an interruption or disturbance in the transmitted and/or recorded data stream with the help of the read and the write addresses having the full word width.

2. Method in accordance with Claim 1, wherein additional items of data (AD) are inserted in the form of separated-out data components into the data stream via the first storage means (4) at the coding end and are then extracted from the data stream via the second storage means (10) at the decoding end, wherein the beginning and the end of the additional items of data is determined by means of a corresponding difference between the read and write addresses having the full word width and the read or write addresses having a reduced word width.

3. Method in accordance with Claim 1 or 2, wherein any transgression of the write address by the read address is prevented at the coding end by means of a comparison process or by inserting code words of greater length, said code words not being taken into consideration during the decoding process.

4. Method in accordance with one or more of the Claims 1 to 3, wherein a predetermined number of bits per average word length (m) is forcibly extracted from the first storage means (4) and added to the data stream.

5. Method in accordance with one or more of the Claims 1 to 4, wherein the first (3, 4) and/or second (9, 10) storage means are used simultaneously as quantising buffers for the data coding and the data decoding processes whereby the difference between the write and read addresses indicates the extent to which this buffer is filled.

6. Coder for a method in accordance with one or more of the Claims 1 to 5, wherein said coder is provided with a coding circuit (1) which converts data, in segmental manner, into digital signals of differing word lengths (lₙ), with a subsequently connected multiplexer (2) which forms blocks of constant average word length (m) using subsequently connected first storage means (3, 4), wherein selected components of the data - in particular, a dc component (DC) and the most important ac components (ACₙ) together with their appertaining addresses - from the segments of the digital signals for each of these blocks are stored in the first storage means and blocks having a word length that is smaller than average are filled with data components (ACₓ) that have been separated out from blocks having a word length which is greater than average, with a demultiplexer (5) which is connected after the storage means and which packets the items of data appertaining to a respective block and passes them on to a channel (6), with a circuit (13) for calculating address pointers which is fed by the first storage means and controls the multiplexer and the demultiplexer and which supplies an address information flag (FL) and an item of address pointer information (POI) including read and write addresses for each block to the first storage means, characterised in that, the circuit for calculating address pointers is designed such that a corresponding write (POI0) and read (POI1) address of the full word width is transmitted and/or recorded before the beginning of each group of a predetermined number of blocks and that the address pointer information (POI₀, POI₁) appertaining to a block only contains a number of LSBs of the full word width of the read or write address for the block which is such as corresponds to the difference between a predetermined maximum word length and the average word length.

7. Decoder for a method in accordance with one or more of the Claims 1 to 5, wherein said decoder is provided with an address pointer decoding circuit (7) connected subsequently of a channel (6) for decoding the address pointer information and for detaching and passing on an address information flag (FL) and a read or write address for each block to an address calculating circuit (14), with a multiplexer (8) which is connected after the address pointer decoding circuit and which, together with subsequently connected second storage means (9, 10), regenerates the data blocks with their original differing word lengths (lₙ), with a subsequently connected demultiplexer (11) which packets the items of data appertaining to a respective block and passes them on to a variable length decoder (12) at the output of which the items of data corresponding to the source data for the coding process are available, and wherein the address calculating circuit (14) controls the multiplexer and the demultiplexer and supplies appropriate addresses to the second storage means,
characterised in that, the address pointer decoding circuit is designed such that it passes on a read or write address of reduced word width for each block and a read or write address of the full word width for each group of blocks to the address calculating circuit, whereby a corresponding write (POI0) and read (POI1) address of the full word width is present before the beginning of each group of a predetermined number of blocks and the address pointer information (POI₀, POI₁) appertaining to a block only contains a number of LSBs of the full word width of the read or write address for the block which is such as corresponds to the difference between a predetermined maximum word length and the average word length, and that the address calculating circuit is designed such that
- the read and the write addresses having the full word width for the groups of blocks and the read or write addresses for each block are determined from the transmitted and/or recorded data stream;
- the blocks are regenerated in correspondence with their original differing word lengths by using these addresses and the second storage means (9, 10), in that the data components (ACₓ) that were separated out from blocks having a word length which is greater than average are added to the selected data components appertaining respectively thereto in time, whereby error free resumption of the decoding process is made possible following an interruption or disturbance in the transmitted and/or recorded data stream with the help of the read and the write addresses having the full word width.

## Revendications

1. Procédé de transmission et/ou mémorisation des données par lequel, côté codeur, les données sont d'abord converties par sections en signaux numériques de longueurs de mots différentes (BL) et sont ensuite, à l'aide d'un premier dispositif de mémorisation (3, 4), affectées à des blocs de longueur moyenne constante (m) dans lesquels les parties de données sélectionnées (en particulier à partir d'une transformation de bloc de points d'image, une partie continue (DCₐ, DC_{b}, DCₕ) et une partie alternative (ACₐ, AC_{b}, ACₕ) la plus importante) à partir des section de signaux numériques sont placées dans chacun de ces blocs et enfin les blocs d'une longueur de mot inférieure à la moyenne qui ont auparavant été stockés en utilisant une information de pointeur d'adresse (FL, POI) dans le dispositif de mémorisation (4) avec une adresse de lecture et écriture, sont remplis de parties de données de blocs séparées (AC_{X}) de longueur de mot supérieure à la moyenne. Les informations d'adresse sont envoyées et/ou stockées dans le même temps,
et côté décodeur, les blocs, par l'utilisation d'un deuxième dispositif de mémorisation (9, 10) et les informations d'adresse sont récupérées dans leurs longueurs de mot initiales et différentes, les parties de données de blocs séparées (AC_{X}) de longueur de mot supérieure à la moyenne sont à chaque fois ajoutées aux parties de données sélectionnées associées de façon temporelle. Procédé **caractérisé en ce que**, côté codeur :
- avant le début de chaque groupe d'un nombre donné de blocs, une adresse d'écriture (POI0) et de lecture (POI1) correspondante d'une largeur de mot complète est transmise et/ou stockée ;
- l'information de pointeur d'adresse (POl₀, (POI₁) appartenant à un bloc comprend uniquement une quantité donnée de LSB de la largeur de mot complète de l'adresse de lecture et écriture pour le bloc qui correspond à la différence entre la longueur maximale de mot fixée et la longueur de mot moyenne,
et côté décodeur :
- les adresses de lecture et écriture avec la largeur de mot complète pour les groupes de blocs et les adresses de lecture et écriture sont déterminées pour chaque bloc à partir du flux de données transmis et/ou enregistré,
- les blocs par utilisation du deuxième dispositif de mémorisation (9, 10)et ces adresses dans leur largeurs de mot initiales et différentes sont extraites en conséquence, les parties de données séparées (AC_{X}) des blocs de longueur de mot supérieure à la moyenne étant à chaque fois ajoutées aux parties de données sélectionnées associées de façon temporelle, de sorte qu'en cas d'interruption ou de défaillance du flux de données transmis et/ou enregistré, une reprise sans erreur du décodage est rendue possible à l'aide des adresses de lecture et écriture avec largeurs de mots complètes.

2. Procédé selon la revendication 1, où côté codeur, des données supplémentaires (AD) sous forme de parties de données séparées sont ajoutées au flux de données via le premier dispositif de mémorisation (4) et côté décodeur, ces données supplémentaires sont extraites via le deuxième dispositif de mémorisation (10). Le début et la fin des données supplémentaires sont déterminés par la différence entre les adresses de lecture et écriture avec longueur de mot complète et les adresses de lecture et écriture avec longueur de mot réduite.

3. Procédé selon la revendication 1 ou 2, où le dépassement de l'adresse d'écriture par l'adresse de lecture côté codeur est empêchée par une comparaison ou par l'insertion de mots de code de plus grande longueur non traités par le décodage.

4. Procédé selon l'une au moins des revendications 1 à 3, où une quantité donnée de bits par longueur de mot moyenne (m) est systématiquement extraite du premier dispositif de mémorisation (4) et introduite dans le flux de données.

5. Procédé selon l'une au moins des revendications 1 à 4, où le premier dispositif de mémorisation (3, 4) et/ou le deuxième dispositif de mémorisation (9, 10) sont utilisés de façon simultanée en tant que tampon de quantification pour le codage-décodage des données. La différence d'adresse entre les pointeurs de lecture et d'écriture indique le niveau de saturation de ce tampon.

6. Codeur destiné à un procédé selon l'une au moins des revendications 1 à 5, équipé d'un circuit de codage (1) qui convertit de façon séquentielle les données en signaux numériques de longueurs de mots différentes (Iₙ) avec un multiplexeur (2), situé en aval, qui, en utilisant un premier dispositif de mémorisation (3, 4) situé en aval, génère des blocs de longueur de mot constante et moyenne (m). Les parties de données sélectionnées (en particulier la partie continue (DC) et la partie alternative (ACₙ) la plus importante et l'adresse associée) provenant des sections de signaux numériques pour chacun de ces blocs sont enregistrées dans le premier dispositif de mémorisation et les blocs d'une longueur de mot inférieure à la moyenne sont remplis de parties séparées (AC_{X}) de blocs d'une longueur de mot supérieure à la moyenne, avec un démultiplexeur (5) situé en aval du dispositif de mémorisation qui regroupe les données appartenant à chaque groupe et les achemine vers un canal (6) avec un circuit de calcul de pointeur d'adresse (13) alimenté par le premier dispositif de mémorisation. Ce circuit commande le multiplexeur et le démultiplexeur et achemine un drapeau d'information d'adresse (FL) et une information de pointeur d'adresse (POI) avec adresse de lecture et écriture pour chaque bloc. Codeur **caractérisé en ce que** le circuit de calcul de pointeur d'adresse est conçu de telle sorte qu'avant le début de chaque groupe d'un nombre donné de blocs, une adresse d'écriture (POI0) et de lecture (POI1) avec largeur de mot complète est transmise et/ou enregistrée et que l'information de pointeur d'adresse d'écriture (POI₀) et de lecture (POI₁) correspondant à bloc contient uniquement un nombre donné de LSB de la longueur de mot complète de l'adresse de lecture et écriture pour le bloc. Ce nombre correspond à la différence entre la longueur maximale de mot fixée et la longueur moyenne de mot.

7. Décodeur destiné à un procédé selon l'une au moins des revendications 1 à 5, équipé d'un circuit de décodage de pointeur d'adresse (7) situé en aval d'un canal (6) pour le décodage des informations de pointeur d'adresse et, pour chaque bloc, pour la séparation et la transmission d'un drapeau d'information d'adresse (FL) et d'une adresse de lecture et écriture sur un circuit de calcul d'adresse (14) avec un multiplexeur (8), situé en aval du circuit de décodage de pointeur d'adresse, qui récupère les blocs de données dans leurs longueurs de mot initiales (Iₙ) et différentes avec un deuxième dispositif de mémorisation (9, 10), situé en aval, avec un démultiplexeur (11), situé en aval, qui regroupe les données appartenant à chaque groupe et les achemine vers un décodeur de longueur variable (12) à la sortie duquel des données de décodage correspondant aux données source sont disponibles. Le circuit de calcul de pointeur d'adresse (14) commande le multiplexeur et le démultiplexeur et achemine les adresses correspondantes vers le deuxième dispositif de mémorisation. Décodeur **caractérisé en ce que** le circuit de décodage de pointeur d'adresse est conçu de telle sorte qu'il transmet une adresse de lecture et écriture avec une largeur de mot réduite pour chaque bloc et une adresse de lecture et écriture avec une largeur de mot complète pour chaque groupe de blocs au circuit de calcul de pointeur d'adresse et qu'avant le début de chaque groupe d'un nombre donné de blocs, une adresse d'écriture (POI0) et de lecture (POI1) correspondante avec largeur de mot complète est transmise et/ou enregistrée et que l'information de pointeur d'adresse d'écriture (POI₀) et de lecture (POI₁) correspondant à un bloc contient uniquement un nombre donné de LSB de la longueur de mot complète de l'adresse de lecture et écriture pour le bloc. Ce nombre correspond à la différence entre la longueur maximale de mot fixée et la longueur moyenne de mot ; et le circuit de calcul de pointeur d'adresse est conçu de telle sorte que :
- les adresses de lecture et écriture avec la largeur de mot complète pour les groupes de blocs et les adresses de lecture et écriture sont déterminées pour chaque bloc à partir du flux de données transmis et/ou enregistré,
- les blocs, par utilisation du deuxième dispositif de mémorisation (9, 10), et ces adresses dans leurs largeurs de mot initiales et différentes sont extraites en conséquence, les parties de données séparées (AC_{X}) des blocs de longueur de mot supérieure à la moyenne étant à chaque fois ajoutées aux parties de données sélectionnées associées de façon temporelle, de sorte qu'en cas d'interruption ou de défaillance du flux de données transmis et/ou enregistré, une reprise sans erreur du décodage est rendue possible à l'aide des adresses de lecture et écriture avec largeurs de mots complètes.
